# EUROPÄISCHE PATENTSCHRIFT

(11) **EP 0 626 524 B1**
(45) Veröffentlichungstag und Bekanntmachung des Hinweises auf die Patenterteilung: **11.06.1997**
(21) Anmeldenummer: 94103253.4
(22) Anmeldetag: 04.03.1994
(51) Int. Cl.: F16D 55/227

(54) **Druckluftbetätigte Schiebesattel-Scheibenbremse für Nutzfahrzeuge**
Pneumatically actuated floating caliper disc brake for commercial vehicles
Frein à disque à étrier coulissant actionné par air comprimé pour véhicules utilitaires

(30) Priorität: 04.05.1993 DE 4314719
(43) Veröffentlichungstag der Anmeldung: 30.11.1994
(73) Patentinhaber: KNORR-BREMSE SYSTEME FÜR NUTZFAHRZEUGE GmbH, 80809 München (DE)
(72) Erfinder: Baumgartner, Hans, D-85368 Moosburg (DE); Bieker, Dieter, D-81827 München (DE)

(56) Entgegenhaltungen:
- EP-A- 0 062 403
- DE-U- 9 003 990
- DE-U- 9 115 195
- FR-A- 2 631 405
- US-A- 4 144 952
- US-A- 4 265 340
- US-A- 4 458 790

## Beschreibung

Die vorliegende Erfindung bezieht sich auf eine druckluftbetätigte Schiebesattel-Scheibenbremse gemäß dem Oberbegriff des Anspruchs 1, die für Nutzfahrzeuge und insbesondere für Straßennutzfahrzeuge vorgesehen ist. Eine derartige Scheibenbremse - allerdings in hydraulische Ausführung für PhW - ist aus der EP 0 062 403 A1 bekannt.

Druckluftbetätigte bzw. pneumatische Schiebesattelscheibenbremsen der gattungsgemäßen Art sind beispielsweise aus der **DE-OS 37 16 202**, der **DE-OS 40 32 885** sowie aus der nicht vorveröffentlichten **DE-OS 42 12 384** bekannt. Bei diesen bekannten Scheibenbremsen wird eine Bremsscheibe von einem in Axialrichtung der Bremsscheibe verschiebbar gelagerten Bremssattel umfaßt, der aufgrund dieser Lagerung auch als "Schiebesattel" bezeichnet wird. Auf einer Seite des Schiebesattels ist eine druckluftbetätigte Zuspannvorrichtung angeordnet, bei deren Betätigung eine auf dieser Seite der Bremsscheibe befindliche Bremsbacke gegen die betreffende Reibfläche der Bremsscheibe gedrückt wird, worauf sich der Schiebesattel aufgrund der Reaktionskräfte in Gegenrichtung verschiebt und dadurch eine auf der gegenüberliegenden Seite befindliche Bremsbacke gleichfalls gegen die Bremsscheibe preßt, so daß durch Reibung beider Bremsbacken an der Bremsscheibe eine entsprechende Bremswirkung erzielt wird.

Der Schiebesattel ist bei diesen bekannten Scheibenbremsen mittels zweier Führungslager an entsprechenden Führungsholmen oder Lagerstangen eines fahrzeugfest montierten Bremsträgers gelagert. Eines der beiden Führungslager weist als Lagerelement eine Messingsführungsbuchse auf, während bei dem anderen Führungslager als Lagerelement eine Elastomerführungsbuchse vorgesehen ist. Die Messingführungsbuchse der bekannten Scheibenbremsen weist jedoch erhebliche Nachteile auf. So sind die Kosten einer derartigen Buchse wesentlich höher als die einer Elastomerführungsbuchse, wobei zudem ein wesentlich größerer Härtungsgrad und eine größere Präzision beim Schliff des Führungsholms erforderlich sind, so daß dessen Herstellungskosten ebenfalls entsprechend erhöht werden.

Weiterhin ist es von Nachteil, daß bei einer Messingführungsbuchse eine beidseitige Abdichtung, beispielsweise in Form von Faltenbälgen, erforderlich ist, um sicher zu verhindern, daß Feuchtigkeit ins Innere der Zuspannvorrichtung gelangt und deren Funktionsfähigkeit durch Rostbefall beeinträchtigt. Darüber hinaus weist ein derartiges Lager ein schlechtes Dämpfungsverhalten bei Rüttelbewegungen des Nutzfahrzeugs auf. Schließlich besteht auch die Gefahr, daß durch Abrieb der Messingführungsbuchse oder ihres Führungsholms infolge von Rüttelbewegungen oder durch langzeitigen Verschleiß eine Schwergängigkeit des Schiebesattels auftritt, was zu einer entsprechend verringerten Bremsleistung führen kann.

Aufgrund der geschilderten Nachteile derartiger Messingführungsbuchsen wurden bereits Anstrengungen unternommen, alternative Lager einzusetzen, bei denen diese Nachteile zumindest teilweise vermeidbar sind. In diesem Zusammenhang wurde auch bereits versucht, beide Lager des Schiebesattels mit Elastomerführungsbuchsen auszustatten, wie dies beispielsweise bei den Schiebesattel-Lagern von Personenkraftwagen der Fall ist. Diese Versuche sind jedoch bei den gattungsgemäßen, für Nutzfahrzeuge vorgesehenen Scheibenbremsen bislang daran gescheitert, daß bei beidseitiger Elastomerlagerung keine ausreichende Führungsstabilität des Schiebesattels erzielt werden konnte. Da ohne eine solche Führungsstabilität jedoch keine ausreichende Funktionsgenauigkeit gewährleistet ist, wurde bislang eine derartige beidseitige Elastomerlagerung als unbrauchbare Lösung wieder verworfen.

Aus FR-A-2 631 405 ist eine Scheibenbremse mit zwei Führungsholmen mit einer kurzen und einer langen Lauffläche bekannt.

Der Erfindung liegt die Aufgabe zugrunde, eine druckluftbetätigte Schiebesattel-Scheibenbremse gemäß dem Oberbegriff des Anspruchs 1 derart weiterzubilden, daß die Lagerung des Schiebesattels sehr preisgünstig ist und dennoch gute Führungseigenschaften aufweist.

Diese Aufgabe wird erfindungsgemäß mit den im kennzeichnenden Teil von Anspruch 1 angegebenen Maßnahmen gelöst.

Erfindungsgemäß wird demzufolge vorgeschlagen, in einem der beiden Führungslager eine Elastomerführungsbuchse vorzusehen, die eine relativ lange Lauffläche aufweist und so dimensioniert ist, daß eine Übergangspassung zum zugeordneten Führungsholm vorliegt, während im anderen Führungslager eine Elastomerführungsbuchse vorgesehen wird, die eine relativ kurze Lauffläche aufweist und so dimensioniert ist, daß der zugeordnete Führungsholm mit einem definierten Spiel zwischen 0,2 und 0,5 mm gleitet. D.h., erfindungsgemäß werden zwei unterschiedlich lange Elastomerführungsbuchsen mit unterschiedlichen, gemäß obiger Lehre dimensionierten Innendurchmessern verwendet. Ausführliche Untersuchungen haben gezeigt, daß die erfindungsgemäße Wahl der Elastomerführungsbuchsen zu einer in jedem Fall ausreichenden Führungsstabilität des Schiebesattels führt. Demzufolge schafft die Erfindung eine Schiebesattel-Lagerung, die trotz beidseitiger Verwendung von Elastomerlagern eine gute Führungsstabilität des Schiebesattels aufweist und demzufolge eine stets ausreichende Funktionsgenauigkeit der Scheiberbremse gewährleistet.

Dadurch, daß bei der erfindungsgemäßen Schiebesattel-Lagerung auf die Verwendung von Messingführungsbuchsen verzichtet werden kann und stattdessen preisgünstige Elastomerführungsbuchsen verwendbar sind, werden die Herstellungskosten entsprechend verringert; eine weitere Verringerung der Herstellungskosten ergibt sich dadurch, daß am Bremsträger keine gehärteten und äußerst exakt geschliffenen Führungsholme benötigt werden, so daß deren Herstellungskosten gleichfalls gesenkt werden.

Um zu vermeiden, daß die von der Erfindung vorgeschlagene Verwendung unterschiedlich langer Elastomerführungsbuchsen die Ersatzteilhaltung unnötig erschwert, empfiehlt es sich gemäß der Lehre des Anspruchs 2, für dasjenige Führungslager, für das die längere Lauffläche erforderlich ist, mehrere Einzel-Elastomerführungsbuchsen zu verwenden; als besonders vorteilhaft erweist es sich in diesem Zusammenhang, im genannten Führungslager zwei Elastomerführungsbuchsen vorzusehen, die vorzugsweise an dessen Randbereich sitzen, wobei für das andere Führungslager eine einzige Elastomerführungsbuchse mit gleichen Abmessungen verwendet werden sollte, so daß die erfindungsgemäße Lagerung lediglich eine einzige Art von Elastomerführungsbuchsen benötigt; demgemäß hat diese bevorzugte Ausführungsform der Erfindung den Vorteil, daß die Bevorratung geeigneter Ersatzteile so einfach wie möglich ist.

Untersuchungen haben weiterhin gezeigt, daß hervorragende Führungseigenschaften des Schiebesattels insbesondere dann erzielbar sind, wenn gemäß der Lehre des Anspruchs 4 das oben genannte definierte Spiel des zweiten Führungsholms zwischen 0,2 und 0,5 mm beträgt. Die genannte Übergangspassung des ersten Führungsholms sollte demgegenüber so eingestellt sein, daß ein relativ enges Spiel oder gegebenenfalls sogar eine leichte Pressung zur betreffenden Elastomerführungsbuchse vorliegt.

Um eine möglichst leichtgängige Lagerung des Schiebesattels zu erzielen empfiehlt es sich gemäß Anspruch 5, die Elastomerführungsbuchsen an ihren Laufflächen mit einem reibungsmindernden Material zu versehen, bei dem es sich beispielsweise um ein Trockengleitmittel handeln kann; ebenfalls ist es möglich, zu diesem Zweck einen reibungsmindernden Kunststoff zu verwenden, der auf die Lauffläche in Form einer Schicht aufgebracht wird, als Folie eingelagert oder anvulkanisiert wird oder alternativ als eingelagertes oder anvulkanisiertes Gewebeband vorliegen kann. Ein für diesen Zweck besonders geeigneter Kunststoff ist Teflon.

Eine besonders einfache Montage und ein ebenso einfaches Auswechseln der erfindungsgemäßen Elastomerführungsbuchsen kann nach der Lehre des Anspruchs 8 dann erreicht werden, wenn am Außenumfang der Elastomerführungsbuchsen ein umlaufender Wulst ausgebildet wird, der in eine entsprechend geformte Ausnehmung bzw. eine Nut des betreffenden Führungslager eingeführt werden kann. In diesem Fall ist es nämlich möglich, die betreffende Elastomerführungsbuchse in das zugeordnete Führungslager solange einzuschieben, bis der umlaufende Wulst in der Nut einrastet. Nach Einführen des Führungsholms in das Führungslager ist die Elastomerführungsbuchse dann unverlierbar gesichert.

Um zu verhindern, daß Wasser in den Spalt zwischen einer Elastomerführungsbuchse und dem zugeordneten Führungslager eindringt und dort Korrosion hervorruft, die den Einbaudurchmesser der Elastomerführungsbuchse verringert und dadurch die jeweils vorgegebenen Führungseigenschaften der erfindungsgemäßen Lager in nachteiliger Weise ändert, ist gemäß der im Anspruch 10 angegebenen Weiterbildung der Erfindung vorgesehen, mindestens an einem der beiden Enden der Außenumfangsfläche jeder Elastomerführungsbuchse ein umlaufendes Dichtprofil auszubilden. In ähnlicher Weise ist an mindestens einem der beiden Enden der Lauffläche jeder Elastomerführungsbuchse eine ringförmige Dichtlippe ausgebildet, die sicher verhindert, daß Verunreinigungen jeder Art in den Führungsbereich des Lagers eindringen.

Durch die erfindungsgemäße Dichtlippe sowie auch durch das umlaufende Dichtprofil wird darüberhinaus erreicht, daß der beim Stand der Technik erforderliche Faltenbalg zur Abdichtung des Lagers vollständig entfallen kann. Damit können auch die zur Befestigung derartiger Faltenbälge erforderlichen Paßsitze entfallen. Hierdurch wird nicht nur eine entsprechende Kosteneinsparung erreicht, sondern auch der zusätzliche Vorteil erzielt, daß der für den Faltenbalg erforderliche Bauraum für eine entsprechende Verlängerung der Führungszone des Lagers verwendet werden kann, ohne die Außenabmessungen des Schiebesattels vergrößern zu müssen. Auf diese Weise kann eine noch bessere Führungsstabilität erzielt werden.

Obgleich die erfindungsgemäße beidseitige Elastomerlagerung hervorragende Dämpfungseigenschaften des Schiebesattels gewährleistet und darüberhinaus die Gefahr eines Klemmens des Schiebesattels weitgehend verhindert, können diese positiven Eigenschaften gegebenenfalls noch dadurch verbessert werden, daß in der Lauffläche jeder Elastomerführungsbuchse mehrere umlaufende Ausnehmungen ausgebildet werden; derartige Ausnehmungen verbessern, je nach Dimensionierung, die Dämpfungseigenschaften des Lagers.

Ein besonders geeignetes Material für die erfindungsgemäßen Elastomerführungsbuchsen ist gemäß Anspruch 12 beispielsweise Gummimaterial.

Die Erfindung wird nachstehend anhand der Beschreibung eines Ausführungsbeispiels unter Bezugnahme auf die Zeichnung näher erläutert. Es zeigen:
Fig.1 anhand einer schematischen Draufsicht den prinzipiellen Aufbau der erfindungsgemäßen Schiebesattel-Scheibenbremse;
Fig.2 eine Detailansicht eines der beiden Schiebelager; und
Fig.3 den detaillierten Aufbau einer bevorzugten Ausführungsform eines erfindungsgemäßen Elastomerführungslagers.

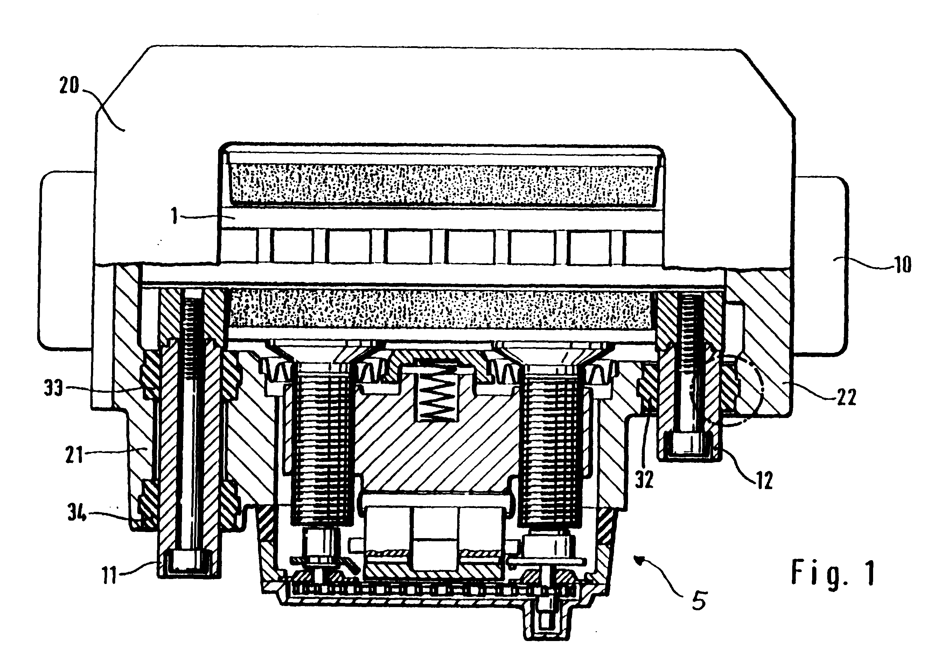

Gemäß Fig.1 ist ein Bremsenträger 10 am Rahmen oder dergleichen eines nicht gezeigten Nutzfahrzeugs befestigt. An diesem Bremsenträger 10 sind in Radialrichtung zu einer Bremsscheibe 1 zwei Führungsholme 11 und 12 in paralleler Anordnung befestigt. Der Führungsholm 11 ist dabei erfindungsgemäß länger als der Führungsholm 12.

In einem Schiebesattel 20 sind zwei Bohrungen ausgebildet, die ein jeweiliges Führungslager 21 bzw. 22 zur verschiebbaren Lagerung des Schiebesattels an den Führungsholmen 11 und 12 des Bremsträgers 10 bilden. Nach Montage des Bremssattels 20 an den Führungsholmen 11 und 12 des Bremsträgers 10 umfaßt der Schiebesattel 20 die Bremsscheibe 1, so daß auf beiden Seiten vorgesehene, nicht gezeigte Bremsbacken im unbetätigten Zustand der Bremse einen vorgegebenen Abstand (das sogenannte "Lüftspiel") zur betreffenden Reibfläche der Bremsscheibe 1 aufweisen.

Bei Druckluftbeaufschlagung eines nicht gezeigten Bremszylinders preßt eine lediglich schematisch gezeigte Zuspannvorrichtung 5 die auf ihrer Seite befindliche Bremsbacke gegen die Bremsscheibe 1, wobei der Schiebesattel 20 bei weiterer Druckerhöhung solange in Gegenrichtung verschoben wird, bis die gegenüberliegende Bremsbacke ebenfalls an der Bremsscheibe 1 anliegt. In diesem "zugespannten" Zustand wird die Bremsscheibe 1 in Abhängigkeit vom jeweiligen Bremsdruck durch Reibung ihrer Reibflächen an den Bremsbacken abgebremst.

Der Schiebesattel ist erfindungsgemäß in beiden Führungslagern 21 und 22 mit Elastomerführungsbuchsen gelagert. Im längeren Führungslager 21 ist am jeweiligen Randbereich jeweils eine Elastomerführungsbuchse 33 und 34 vorgesehen, während im gegenüberliegenden, kürzeren Führungslager 22 lediglich eine Elastomerführungsbuchse 32 sitzt. Darüberhinaus sind die Führungseigenschaften der beiden Lager durch entsprechende Dimensionierung jeweils unterschiedlich eingestellt. Im längeren Lager 21 sind die Innendurchmesser der Elastomerführungsbuchsen 33 und 34 so gewählt, daß ihre Laufflächen eine Übergangspassung zur Außenfläche des Führungsholms 11 aufweisen. Der Begriff Übergangspassung soll hierbei ein relativ enges Spiel oder gegebenenfalls eine leichte Pressung zwischen diesen beiden Teilen bezeichnen. Im Gegensatz dazu ist der Innendurchmesser der Elastomerführungsbuchse 32 so gewählt, daß der zweite Führungsholm 12 mit einem definierten Spiel gleitet. Ausführliche Untersuchungen haben gezeigt, daß die erfindungsgemäße Kombination von unterschiedlicher Länge der Führungslager und unterschiedlicher Passung der jeweiligen Elastomerführungsbuchsen eine ausgezeichnete Führungsstabilität gewährleistet.

Der zur Erzielung der genannten Preßpassung bzw. des definierten Spiels erforderliche Abstand der Lauffläche der Elastomerführungsbuchsen zur Außenfläche des betreffenden Führungsholms kann selbstverständlich auch durch entsprechende Änderung des Innendurchmessers des jeweiligen Führungslagers 21 bzw. 22 eingestellt werden. Ebenfalls ist es möglich, den Außendurchmesser des Führungsholms 11 bzw. 12 entsprechend anzupassen. Die beiden letztgenannten Möglichkeiten haben im Gegensatz zu einer entsprechenden Dimensionierung der Elastomerführungsbuchsen den Vorteil, daß ein einziger Typ von Elastomerführungsbuchsen verwendet werden kann, was einerseits die Lagerhaltung vereinfacht und andererseits die Möglichkeit einer falschen Montage ausschließt.

Obgleich im Führungslager 21 in der gezeigten Ausführungsform zwei Elastomerführungsbuchsen vorgesehen sind, ist es gegebenenfalls möglich, eine noch größere Anzahl von Führungsbuchsen zu verwenden, falls dies zweckmäßig erscheint. Gleichfalls ist es möglich, eine einzige Elastomerführungsbuchse zu verwenden, deren Länge beispielsweise der des <Führungslagers 21 entspricht. Wesentlich ist alleine, daß die Gesamt-Führungslänge der Elastomerführungsbuchse(n) des Führungslagers 21 entsprechend der Lehre der Erfindung länger als die des Führungslagers 12 ist. Jedoch ist die gezeigte Ausführungsform insofern vorteilhaft, als hierdurch die Möglichkeit besteht, lediglich eine einzige Art von Elastomerführungsbuchse vorsehen zu müssen.

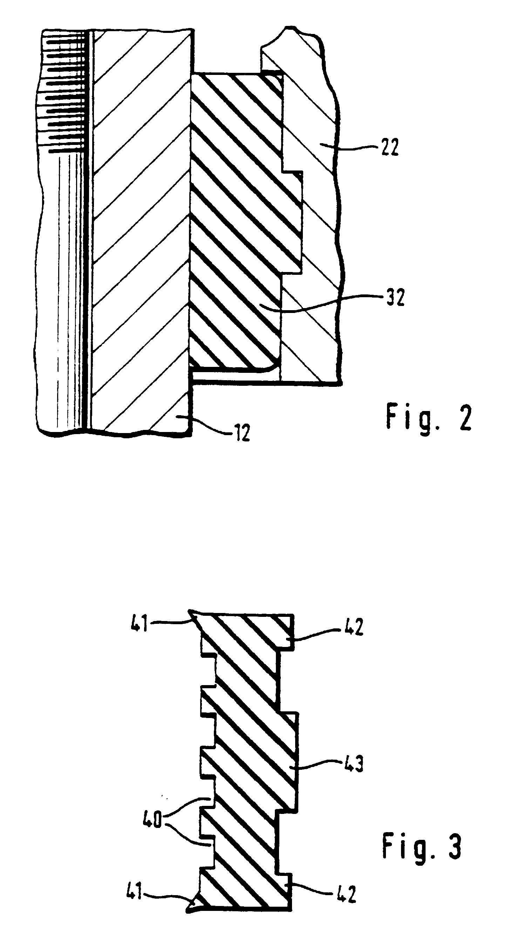

In den Figuren 2 und 3 sind bevorzugte Ausführungsformen der erfindungsgemäßen Elastomerführungsbuchsen näher gezeigt, wobei Fig.2 eine vergrößerte Detailansicht des kürzeren Führungslagers 12, 22 zeigt. Aus beiden Figuren ist zu erkennen, daß am Außenumfang, etwa in der Mitte der Elastomerführungsbuchse, ein umlaufender Wulst 43 ausgebildet ist, der so dimensioniert ist, daß er in eine entsprechend geformte Ausnehmung bzw. eine Nut des Führungslagers eingeführt werden kann, wodurch erreicht wird, daß die Elastomerführungsbuchse trotz einfacher Montage und Demontage im Führungslager sicher gehalten wird.

An beiden Enden der Lauffläche ist jeweils eine ringförmige Dichtlippe 41 ausgebildet, die verhindert, daß Wasser oder Verunreinigungen in den Innenraum der Zuspannvorrichtung eindringen können. Das Eindringen von Wasser über den Spalt zwischen der Außenfläche der Elastomerführungsbuchse und dem Führungslager wird mit Hilfe zweier umlaufender Dichtprofile 42 verhindert, die ebenfalls an den Außenenden der Elastomerführungsbuchse ausgebildet sind. Gegebenenfalls ist es ausreichend, lediglich eine einzige Dichtlippe 41 und ein einziges Dichtprofil 42 vorzusehen. Aufgrund der Dichtlippe sowie auch aufgrund des umlaufenden Dichtprofils wird erreicht, daß der bei herkömmlichen Lagern zur Abdichtung erforderliche Faltenbalg vollständig entfallen kann. Damit können auch die zur Befestigung derartiger Faltenbälge erforderlichen Paßsitze entfallen. Hierdurch wird nicht nur eine entsprechende Kosteneinsparung erreicht, sondern auch der zusätzliche Vorteil erzielt, daß der für den Faltenbalg erforderliche Bauraum für eine entsprechende Verlängerung der Führungszone des Lagers verwendet werden kann, ohne die Außenabmessungen des Schiebesattels vergrößern zu müssen. Auf diese Weise kann eine noch bessere Führungsstabilität erzielt werden.

Aus Fig.3 ist weiterhin zu erkennen, daß in der Lauffläche der Elastomerführungsbuchse mehrere umlaufende Ausnehmungen ausgebildet sind. Durch geeignete Dimensionierung der Tiefe und Breite dieser Ausnehmungen ist es möglich, die Dämpfungseigenschaften der Elastomerführungsbuchse je nach Bedarf zu ändern.

An ihrer Lauffläche ist die Elastomerführungsbuchse der Fig.3 mit einem nicht gezeigten, reibungsmindernden Material versehen. Zu diesem Zweck kann beispielsweise ein Trockengleitmittel verwendet werden. Ebenfalls ist es möglich, eine Teflonschicht auf die Lauffläche aufzubringen. Alternativ kann auch eine Teflonfolie oder ein Teflon-Gewebeband in die Lauffläche eingelagert oder anvulkanisiert werden. Gegebenenfalls sind auch andere Kunststoffmaterialien verwendbar. Als Material für die Elastomerführungsbuchse wird im übrigen vorzugsweise Gummi verwendet.

## Patentansprüche

1. Druckluftbetätigte Schiebesattel-Scheibenbremse für Nutzfahrzeuge, bei der ein eine Bremsscheibe (1) umfassender Schiebesattel (20) mittels zweier Führungslager (21, 22) an entsprechenden Führungsholmen (11, 12) eines fahrzeugfesten Bremsträgers (10) in Radialrichtung der Bremsscheibe (1) verschiebbar gelagert ist, **dadurch gekennzeichnet,** daß im ersten Führungslager (21) eine Elastomerführungsbuchse (33, 34) sitzt, die eine relativ lange Lauffläche aufweist und so dimensioniert ist, daß eine Übergangspassung zum ersten Führungsholm (11) vorliegt, und daß im zweiten Führungslager (22) eine Elastomerführungsbuchse (32) sitzt, die eine relativ kurze Lauffläche aufweist und so dimensioniert ist, daß der zweite Führungsholm (12) mit einem definierten Spiel gleitet, wobei das definierte Spiel des zweiten Führungsholms (12) zwischen 0,2 und 0,5 mm beträgt.

2. Scheibenbremse nach Anspruch 1, **dadurch gekennzeichnet,** daß die Elastomerführungsbuchse des ersten Führungslagers (21) durch mehrere Elastomerführungsbuchsen (33, 34) gebildet ist.

3. Scheibenbremse nach Anspruch 1, **dadurch gekennzeichnet,** daß im ersten Führungslager (21) zwei Elastomerführungsbuchsen (33, 34), vorzugsweise jeweils an dessen Randbereichen, sitzen und daß im zweiten Führungslager (22) eine einzige Elastomerführungsbuchse (32) sitzt, wobei diese drei Elastomerführungsbuchsen (32-35) im wesentlichen gleich groß sind.

4. Scheibenbremse nach einem der Ansprüche 1 bis 3, **dadurch gekennzeichnet,** daß die Elastomerführungsbuchsen (32-34) an ihren Laufflächen mit einem reibungsmindernden Material versehen sind.

5. Scheibenbremse nach Anspruch 4, **dadurch gekennzeichnet,** daß als reibungsminderndes Material ein Trockengleitmittel oder eine auf die Lauffläche aufgebrachte Schicht, eine eingelagerte oder anvulkanisierte Folie oder ein eingelagertes oder anvulkanisiertes Gewebeband jeweils aus reibungsminderndem Kunststoff vorgesehen ist.

6. Scheibenbremse nach Anspruch 5, **dadurch gekennzeichnet,** daß als reibungsmindernder Kunststoff Teflon vorgesehen ist.

7. Scheibenbremse nach einem der Ansprüche 1 bis 6, **dadurch gekennzeichnet,** daß die Elastomerführungsbuchsen (32-34) an ihrem Außenumfang einen umlaufenden Wulst (43) aufweisen, der in eine entsprechend geformte Ausnehmung des betreffenden Führungslagers einführbar ist.

8. Scheibenbremse nach einem der Ansprüche 1 bis 7, **dadurch gekennzeichnet,** daß die Elastomerführungsbuchsen (32-34) mindestens an einem der beiden Enden ihrer Lauffläche eine ringförmige Dichtlippe (41) aufweisen.

9. Scheibenbremse nach einem der Ansprüche 1 bis 8, **dadurch gekennzeichnet,** daß die Elastomerführungsbuchsen (32-34) mindestens an einem der beiden Enden ihrer Außenumfangsfläche ein umlaufendes Dichtprofil (42) aufweisen.

10. Scheibenbremse nach einem der Ansprüche 1 bis 9, **dadurch gekennzeichnet,** daß in der Lauffläche der Elastomerführungsbuchsen (32-34) mehrere umlaufende Ausnehmungen (40) ausgebildet sind.

11. Scheibenbremse nach einem der Ansprüche 1 bis 10, **dadurch gekennzeichnet,** daß die Elastomerführungsbuchsen (32-34) aus Gummimaterial bestehen.

## Revendications

1. Frein à disque à étrier coulissant, actionné par air comprimé pour véhicules utilitaires, dans lequel un étrier (20), qui comprend une disque à frein (1), est logé, moyennant deux appuis-guides (21, 22), aux longerons de guidage (11, 12) appropriés d'un support de frein (10), qui est fixé au véhicule, pour son déplacement en sens radial de ladite disque à frein (1), **caractérisé en ce** qu'un coussinet-guide d'élastomère (33, 34) est fixé dans le premier (21) desdits appuis-guides, qui a une surface de glissement relativement longue et est dimensionné de façon à établir un ajustement de transition vers le premier longeron de guidage (11), et en ce qu'un coussinet-guide d'élastomère (32) est fixé dans le deuxième (22) desdits appuis-guides, qui a une surface de glissement relativement courte et est dimensionné de façon que le deuxième longeron de guidage (12) coulisse à un jeu défini, ce jeu défini du deuxième longeron de guidage (12) étant dans la gamme entre 0,2 et 0,5 mm.

2. Frein à disque selon la revendication 1, **caractérisé en ce** que ledit coussinet-guide d'élastomère dudit premier appui-guide (21) est formé par une pluralité de coussinets-guides d'élastomère (33, 34).

3. Frein à disque selon la revendication 1, **caractérisé en ce** que deux coussinets-guides d'élastomère (33, 34) sont fixés dans ledit premier appui-guide (21), de préférence dans les zones de bord respectifs du dernier, et en ce qu'un seul coussinet-guide d'élastomère (32) est fixé dans ledit deuxième appui-guide, les dimensions de ces trois coussinets-guides d'élastomère (32 à 35) étant essentiellement égales.

4. Frein à disque selon une quelconque des revendications 1 à 3, **caractérisé en ce** que lesdits coussinets-guides d'élastomère (32 à 34) sont garnis d'une matière qui diminue la friction à leurs surfaces de glissement.

5. Frein à disque selon la revendication 4, **caractérisé en ce** qu'un agent antifriction à sec ou une couche appliquée sur la surface de glissement, ou une feuille noyée ou fixée par vulcanisation, ou un ruban textile intercalée noyée ou fixée par vulcanisation, est disposée à titre de matière qui diminue la friction, qui consiste, en chaque cas, en une matière synthétique qui diminue la friction.

6. Frein à disque selon la revendication 5, **caractérisé en ce** que le téflon est appliqué à titre de matière synthétique qui diminue la friction.

7. Frein à disque selon une quelconque des revendications 1 à 6, **caractérisé en ce** que lesdits coussinets-guides d'élastomère (32 à 34) présentent un bourrelet périphérique (43) à leur périmètre extérieur, qui est propre à être introduit dans un creux, à forme correspondante, de l'appui-guide respectif.

8. Frein à disque selon une quelconque des revendications 1 à 7, **caractérisé en ce** que lesdits coussinets-guides d'élastomère (32 à 34) présentent, au moins à une des deux extrémités de leur surface de glissement, une lèvre de garniture annulaire (41).

9. Frein à disque selon une quelconque des revendications 1 à 8, **caractérisé en ce** que lesdits coussinets-guides d'élastomère (32 à 34) présentent, au moins à une des deux extrémités de leur aire circonférentielle, un joint d'étanchéité profilé périphérique (42).

10. Frein à disque selon une quelconque des revendications 1 à 9, **caractérisé en ce** qu'une pluralité de creux périphériques (40) sont formés dans la surface de glissement desdits coussinets-guides d'élastomère (32 à 34).

11. Frein à disque selon une quelconque des revendications 1 à 10, **caractérisé en ce** que lesdits coussinets-guides d'élastomère (32 à 34) consistent en une matière de caoutchouc.

## Claims

1. Pneumatically actuated floating-caliper disc brake for commercial vehicles, wherein a floating caliper (20), comprising a brake disc (1), is supported for displacement in the radial direction of said brake disc (1), by means of two guide bearings (21, 22), at appropriate guiding longerons (11, 12) of a brake bracket (10) integral with the vehicle, **characterized in** that an elastomer guide sleeve (33, 34) is fitted in the first one (21) of said guide bearings, which presents a comparatively long bearing surface and is dimensioned so as to achieve a transition fit towards the first guiding longeron (11), and in that an elastomer guide sleeve (32) is fitted in the second one (22) of said guide bearings, which has a comparatively short bearing surface and is so dimensioned that the second guiding longeron (12) will slide at a defined clearance, with the defined clearance of said second guiding longeron (12) being in the range from 0.2 to 0.5 mm.

2. Disc brake according to Claim 1, **characterized in that** said elastomer guide sleeve of said first guide bearing (21) is formed by a plurality of elastomer guide sleeves (33, 34).

3. Disc brake according to Claim 1, **characterized in that** two elastomer guide sleeves (33, 34) are fitted in said first guide bearing (21), preferably in the respective marginal areas thereof, and in that a single elastomer guide sleeve (32) is fitted in said second guide bearing, with the dimensions of these three elastomer guide sleeves (32 à 35) being substantially equal.

4. Disc brake according to any of Claims 1 to 3, **characterized in** that said elastomer guide sleeves (32 to 34) are provided with a friction-reducing material at their bearing surfaces.

5. Disc brake according to Claim 4, **characterized in that** a dry lubricant or a layer applied on the bearing surface, or a film embedded or fixed by vulcanization, or a textile web embedded or fixed by vulcanization, is provided as friction-reducing material which consists of a friction-reducing synthetic in each case.

6. Disc brake according to Claim 5, **characterized in that** Teflon is applied as friction-reducing synthetic.

7. Disc brake according to any of Claims 1 to 6, **characterized in** that said elastomer guide sleeves (32 to 34) present a peripheral shoulder (43) at their outside periphery, which is adapted for introduction into a recess of mating shape on the the respective guide bearing.

8. Disc brake according to any of Claims 1 to 7, **characterized in** that said elastomer guide sleeves (32 to 34) present, at least at one of the two ends of their bearing surface, an annular packing washer (41).

9. Disc brake according to any of Claims 1 to 8, **characterized in** that said elastomer guide sleeves (32 to 34) present, at least at one of the two ends of their outside circumferential area, a profiled peripheral sealing (42).

10. Disc brake according to any of Claims 1 to 9, **characterized in** that a plurality of peripheral recesses (40) are formed in the bearing surfaces of said elastomer guide sleeves (32 to 34).

11. Disc brake according to any of Claims 1 to 10, **characterized in** that said elastomer guide sleeves (32 to 34) consist of a rubber material.
